# DEMANDE DE BREVET EUROPEEN

(11) **EP 0 539 284 A1**
(43) Date de publication de la demande: **28.04.1993**
(21) Numéro de dépôt: 92402865.7
(22) Date de dépôt: 20.10.1992
(51) Int. Cl.: F16L 3/10

(54) **Collier de fixation de tuyau de descente pluviale**

(30) Priorité: 21.10.1991 FR 9112988
(71) Demandeur: ETS FRENEHARD ET MICHAUX S.A., F-61300 L'Aigle (FR)
(72) Inventeur: Le Bourgeois, Jacques, F-61300 L'Aigle (FR)
(74) Mandataire: Beauchamps, Georges

(57) **Abrégé**

L'invention concerne un collier (1, 2) de fixation murale d'un tuyau de descente pluviale (24), comprenant un socle rigide (1) et une bride de serrage (2) à arceau rigide, articulée par une extrémité (20) à une extrémité correspondante (11) du socle (1) en ayant son autre extrémité conformée en patte perforée (18) d'attache à une patte perforée correspondante (10) à l'autre extrémité du socle (1), ladite patte de socle étant traversée d'un orifice (12) pour vis (3).

Le socle (1) est sensiblement symétrique par rapport à un plan médian transversal et comporte donc une seconde patte d'attache (11) à son extrémité opposée. La bride de serrage (2) est articulée à cette seconde patte (11) du socle (1), lequel embrasse le tuyau suivant un arc inférieur à une demi-circonférence. Les deux pattes opposées (10, 11) du socle (1) sont également inclinées sur ledit plan médian de façon que leurs plans respectifs forment un angle dièdre aigu rentrant, contenant ledit socle. L'arc d'embrassement et l'angle dièdre sont tels qu'en configuration fermée du collier monté sur le tuyau, le contour apparent frontal du collier présente une saillie latérale minimale des pattes (10, 11, 18) du socle (1) et de la bride (2) vers l'extérieur.

L'invention est applicable à la fixation des tuyaux de descente pluviale.

## Description

La présente invention concerne généralement et a essentiellement pour objet un dispositif formant collier de fixation murale d'un corps cylindrique allongé par exemple continu quelconque, notamment d'un tuyau en particulier adossé de descente pluviale ou analogue ainsi que les diverses applications et utilisations résultant de la mise en oeuvre d'un tel dispositif et les systèmes, installations et équipements et notamment les bâtiments, édifices, maisons et constructions analogues pourvus d'un tel dispositif.

Dans l'état de la technique antérieure, on connaît déjà, parmi les produits et articles couramment commercialisés et ayant même fait l'objet de normes industrielles, un tel collier métallique relativement rigide formant support-console de maintien de tuyau et comprenant un socle en bande de tôle nervurée approximativement en forme de chape à portion intermédiaire de base courbe ou conformée en auget à convexité externe à fond plat, traversée d'un trou taraudé ou à écrou rapporté par soudage ou sertissage pour vissage, depuis l'extérieur, de l'embout fileté à collet d'arrêt ou à embase de butée d'une tige rectiligne de pénétration murale formant pointe lisse enfonçable ou broche filetée, ledit socle étant à branches divergentes ayant, chacune, une partie concave arquée épousant coaxialement le tuyau, et une bride de serrage en bande de tôle en arceau pour embrasser coaxialement ledit tuyau et cylindriquement articulée par une extrémité à l'extrémité de forme conjuguée d'une branche correspondante dudit socle au moyen d'une charnière à charnons roulés formés aux extrémités respectives de ladite bride de serrage et de la branche de socle associée et à axe d'articulation à tête assujetti par sertissage. L'autre extrémité de la bride de serrage est repliée vers l'extérieur en forme de patte terminale perforée d'attache à une patte terminale perforée correspondante formée par la partie extrême, également repliée vers l'extérieur, de l'autre branche dudit socle, les deux pattes coopérantes respectivement de la bride et du socle étant orientées de telle façon qu'en position d'assemblage jointif, ces deux pattes sont parallèles et leur plan de joint passe par l'axe d'articulation précité. La patte de la bride de serrage est traversée d'un trou lisse, rond ou ovale, pour le passage, avec'eu, d'une vis de liaison et de serrage tandis que la patte associée du socle est traversée d'un trou fileté pour ladite vis, formé en particulier par un écrou rapporté notamment par sertissage sur ladite patte. La vis a la forme d'un piton fileté à tête en forme de boucle ou d'oeil permettant une manoeuvre manuelle de la vis pour le serrage et le desserrage. La profondeur de la partie en auget du socle est suffisante pour que l'embout fileté de la tige précitée ne vienne pas en contact avec le tuyau.

On connaît aussi des colliers dans lesquels l'élément de fixation murale, constitué, dans le collier décrit ci-dessus, par une tige vissée, est formé par une embase taraudée, sertie dans un trou correspondant de la portion de base du socle et destinée à se visser sur une patte de scellement à vis scellée dans le mur.

Les colliers connus précités souffrent notamment des inconvénients suivants :
- en raison de la rigidité de la bride de serrage, il y a risque de déformation du conduit ou tuyau lors du serrage ;
- la bride de serrage n'est pas détachable du socle sans détérioration de l'axe d'articulation ;
- les écrous, rapportés par soudage ou sertissage respectivement sur la patte du socle et sur la portion de base de celui-ci, présentent un risque de corrosion et de séparation du socle ;
- les pattes latéralement saillantes vers l'extérieur, respectivement du socle et de la bride de serrage, qui sont très apparentes, sont d'un aspect inesthétique en raison de la solution de continuité visuelle ainsi créée dans le contour apparent du conduit cylindrique ;
- ces pattes saillantes sont dangereuses à cause des risques de blessures des passants créés par les colliers mis en place sur le tuyau en partie basse à hauteur d'homme ou d'enfant ;
- en cas d'utilisation de l'embase taraudée rapportée par sertissage, celle-ci présente une faiblesse de fixation au socle en raison d'un tel sertissage généralement léger et est toujours très sensible à la corrosion ;
- la tige de fixation murale et l'embase taraudée ne sont pas des pièces interchangeables sur un même socle ;
- le nervurage du socle en vue de son raidissement complique sa fabrication en rendant celle-ci plus onéreuse.
- pour ouvrir le collier, il est nécessaire d'enlever complètement la vis précitée de celui-ci.

La publication antérieure N° 2 558 544 du brevet français N° 84 01 503 révèle un collier de fixation de tubes tels que tuyaux de cheminée ou d'évacuation des gaz brûlés d'un radiateur ou autres appareils ménagers, gaines véhiculant un corps gazeux ainsi que de câbles de sections différentes contre une paroi. Il comporte un socle pouvant être de plusieurs types pour épouser parfaitement la forme du conduit et une bande de métal enserrant parfaitement le conduit et s'accrochant par une extrémité au socle et par l'autre extrémité à un curseur tendeur mobile monté dans le socle et déplaçable en translation rectiligne dans les deux sens opposés par une vis de serrage unique également montée dans le socle. Dans sa position montée de service, ce dispositif est dissimulable derrière la pièce qu'il supporte, de sorte qu'il est d'aspect esthétique car rien n'est apparent parce que le conduit fixé cache le socle du collier. Le socle est en forme de boîtier en tôle emboutie et se fixe, sur la paroi qui le supporte, par plusieurs vis traversant des trous correspondants dans le fond du boîtier. Ce dispositif présente l'inconvénient d'une structure de socle et de mécanisme de serrage compliquée.

L'invention a principalement pour but de supprimer les inconvénients précités en créant un nouveau collier d'une structure plus simple et plus économique du type avantageusement métallique comprenant un socle relativement rigide en forme de chape ou berceau à portion intermédiaire de base traversée d'un trou pour l'attache d'un élément de fixation murale et à deux branches divergentes ayant chacune une partie concave arquée destinée à épouser coaxialement le tuyau ; et une bride de serrage à arceau relativement rigide pour embrasser coaxialement ledit tuyau et articulée par une extrémité à l'extrémité de forme conjuguée d'une branche correspondante dudit socle en ayant son autre extrémité conformée en patte terminale extérieurement saillante perforée d'attache à une patte terminale extérieurement saillante perforée correspondante formée par la partie extrême de l'autre branche dudit socle, ladite patte de socle étant traversée d'un orifice pour vis de liaison et de serrage des deux pattes et ces deux pattes étant sensiblement parallèles en position montée jointive d'assemblage, ce dispositif étant caractérisé en ce qu'en combinaison :
- ledit socle est de forme sensiblement symétrique généralement par rapport au plan médian transversal de ladite portion de base ou dudit trou, passant par l'axe commmun de courbure desdites parties concaves et comporte donc une seconde patte d'attache formée à l'extrémité de la branche de socle opposée à ladite autre branche de celui-ci ;
- ladite bride de serrage est articulée à ladite seconde patte d'attache du socle et est éventuellement partiellement déformable élastiquement ;
- ledit socle embrasse ledit tuyau suivant un arc inférieur à une demi-circonférence ;
- les deux pattes opposées du socle sont sensiblement planes et inclinées également mais en sens opposés sur ledit plan médian en s'étendant ainsi du côté de la face externe du socle, de façon que leurs plans géométriques respectifs se coupent dans ledit plan médian en formant un dièdre en angle et aigu rentrant contenant ledit socle et admettant ledit plan médian comme plan bissecteur ;
- ledit arc d'embrassement et ledit angle dièdre ont des valeurs respectives telles qu'en configuration fermée du collier monté sur le tuyau, le contour apparent frontal dudit collier, vu du côté de la bride de serrage suivant l'axe central dudit trou, présente une saillie latérale minimale desdites pattes de socle et de bride vers l'extérieur, lesquelles sont ainsi peu visibles ou cachées en majeure partie en position montée dudit tuyau.

Selon une autre caractéristique de l'invention la bride de serrage précitée comporte une portion intermédiaire rigide courbée en arc circulaire inférieure à une demi-circonférence, c'est-à-dire capable d'un angle au centre inférieur à 180°, et prolongée sensiblement tangentiellement, à l'état non serré, à chaque extrémité d'arc par une portion sensiblement rectiligne, de préférence élastiquement flexible de raccordement au socle précité.

Selon encore une autre caractéristique de l'invention, la jonction d'articulation précitée est séparable, c'est-à-dire déconnectable ou désaccouplable de la bride de serrage précitée de façon à rendre cette dernière démontable de son socle.

Suivant encore une autre caractéristique de l'invention, d'une part, la jonction d'articulation précitée est à pivotement, conférant à la bride de serrage précitée, une mobilité angulaire relative par rotation sphérique sensiblement dans toutes les directions et, d'autre part, l'ouverture de passage de vis dans la patte d'attache précitée de ladite bride de serrage est une encoche en fente à fond arrondi et à bords latéraux au moins approximativement rectilignes et parallèles ou légèrement divergents, débouchant par un bord latéral de ladite patte et orientée sensiblement obliquement de façon à permettre son engagement sur la vis précitée montée sur le socle et son dégagement de celle-ci par mouvement pivotant relatif de ladite bride de serrage.

Selon encore une autre caractéristique de l'invention, l'articulation précitée et à parties coopérantes respectivement mâle et femelle et l'extrémité d'articulation de la bride de serrage précitée est plate et conformée en bouton plat en forme de T dont la barrette transversale est sensiblement parallèle à l'axe de courbure de ladite bride et destiné à être amoviblement reçu avec'eu dans un orifice en boutonnière de forme complémentaire en T traversant la patte d'articulation du socle précité et dont la rainure ou fente transversale propre de l'ouverture T est sensiblement parallèle à un plan perpendiculaire au plan médian précité.

Selon encore une autre caractéristique de l'invention, l'arc d'embrassement de tuyau du socle précité est sensiblement équivalent à un quadrant et les plans respectifs des pattes précitées dudit socle sont sensiblement radiaux et orthogonaux, leur droite d'intersection coïncidant avec l'axe commun de courbure précité.

Suivant encore une autre caractéristique de l'invention, le trou, traversant la portion de base du socle et le trou à vis traversant une patte du socle sont taraudés.

Enfin suivant encore une autre caractéristique de l'invention, la bande de tôle du socle est uniformément plate et relativement épaisse en étant exempte de toute nervure tandis que la bande de tôle formant la bride de serrage précitée, est plate, partiellement nervurée et relativement plus mince et d'épaisseur uniforme.

Le dispositif conforme à l'invention offre des avantages importants dont notamment les suivants :
- la section transversale de la bande métallique formant le socle est telle qu'elle présente une résistance tant mécanique qu'à la corrosion supérieure aux colliers nervurés antérieurement connus et la protection contre la corrosion du collier selon l'invention est avantageusement assurée efficacement par galvanisation à chaud ;
- le trou, directement taraudé dans la portion de base du socle, permet, à volonté, l'emploi alterné ou parfaitement interchangeable, comme élément de fixation murale, d'une tige lisse à embout fileté ou d'une patte à vis à embout fileté se vissant directement dans le trou taraudé du socle ;
- la présence de parties élastiques dans la bride de serrage permet d'éviter toute déformation du tuyau lors du serrage tout en permettant à la bride de serrage de l'épouser parfaitement ;
- l'ouverture et la fermeture du collier peuvent s'effectuer sans démonter la vis grâce à l'articulation pivotante et à la patte encochée de la bride de serrage dont l'articulation est , en outre, facilement désaccouplable et réaccouplable ;
- le collier présente un aspect esthétique grâce à l'effacement ou le retrait maximal des pattes respectivement du socle et de la bride de serrage, ce qui supprime en outre tout danger d'accrochage par des passants car les parties extérieurement saillantes du collier sont pratiquement cachées par le contour apparent frontal ou de devant du tuyau sur lequel le collier est monté.

L'invention sera mieux comprise et d'autres buts, caractéristiques, détails et avantages de celle-ci apparaîtront plus clairement au cours de la description explicative qui va suivre en se reportant aux dessins schématiques annexés donnés uniquement à titre d'exemple non limitatif illustrant un mode de réalisation spécifique actuellement préféré de l'invention et dans lesquels :

La figure 1 représente une vue éclatée en perspective du dispositif conforme à l'invention du type avec pointe à vis.

La figure 2 est une vue de dessus, à plus petite échelle, du dispositif monté sur un tuyau.

La figure 3 est une vue fragmentaire isolée en perspective de la partie de base en auget du socle dans laquelle est vissée, à la place de la tige lisse pointue représentée sur la figure 1, une patte de scellement à vis.

La figure 4 représente une vue de devant de face du collier monté sur le tuyau, suivant la flèche IV de la figure 2.

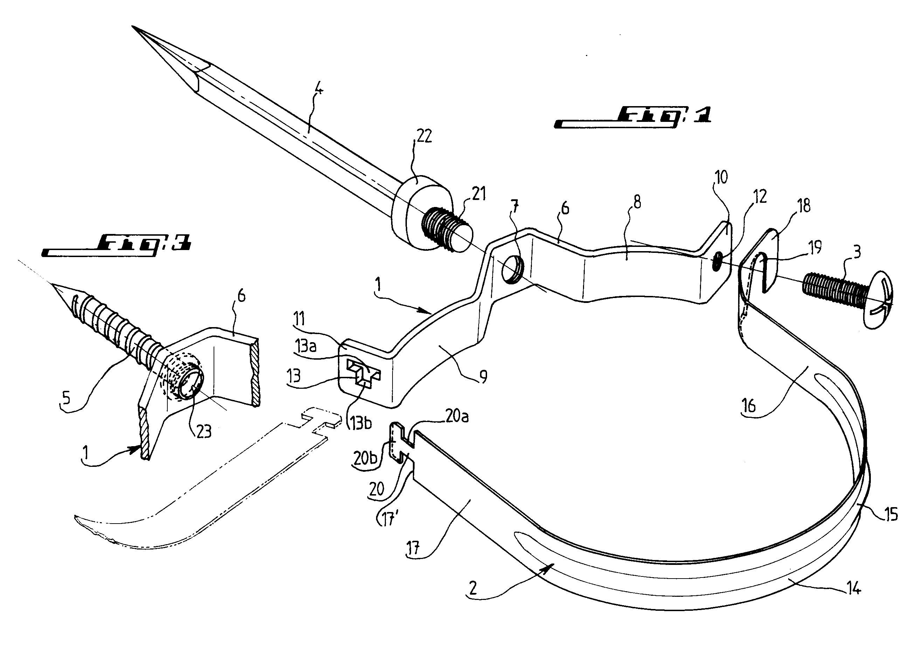

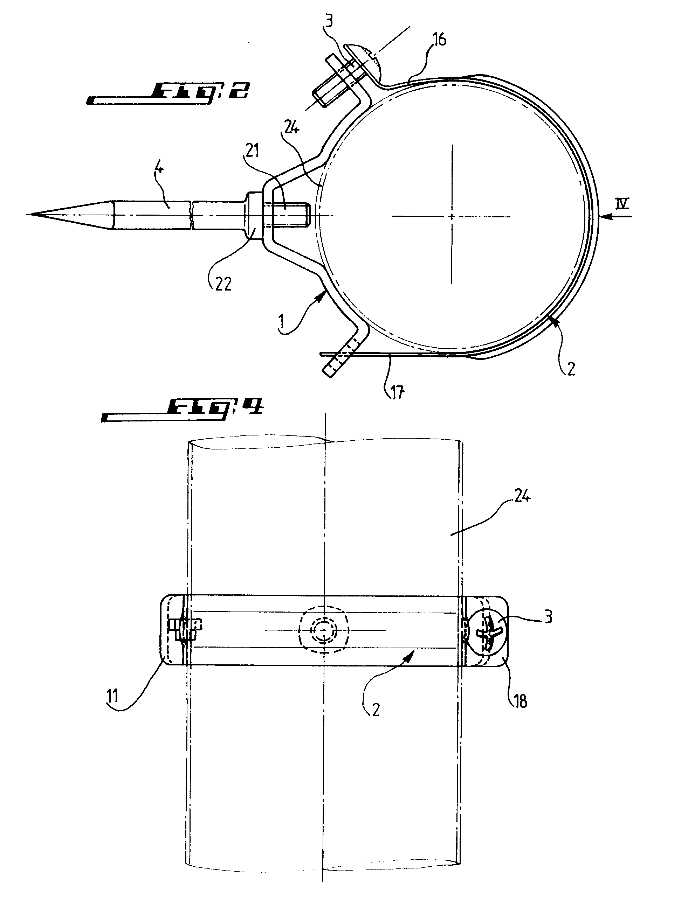

Selon l'exemple de réalisation représenté, le collier de fixation, conforme à l'invention, est de préférence métallique et se compose de quatre pièces seulement, à savoir : un socle 1, une bride de serrage 2, une vis de serrage avantageusement à tête par exemple à fente ou à empreinte cruciforme et d'un élément de fixation murale sous la forme d'une tige rectiligne 4 (figures 1 et 2) ou d'une patte à vis 5 (figure 3).

Le socle 1 est constitué par une bande de tôle à bords longitudinaux parallèles, suffisamment épaisse pour être relativement rigide, c'est-à-dire mécaniquement résistante notamment à la flexion sous les contraintes de service qu'elle subit en raison des forces appliquées en particulier de serrage du tuyau 24 à supporter. Cette bande de tôle est conformée suivant un contour brisé partiellement curviligne obtenu avantageusement par pliage en présentant une forme généralement ou au moins approximativement symétrique par rapport à un plan médian transversal passant par l'axe longitudinal de la tige rectiligne 4 à l'état monté sur le socle 1. Le socle affecte ainsi généralement la forme approximative d'un étrier ou berceau ou d'une chape d'une configuration sensiblement indéformable à profil polygonal comportant, dans sa partie intermédiaire, un segment sensiblement en forme d'auget 6 à profil trapéizoïdal isocèle ou éventuellement rectangulaire et à fond plat dont le creux où la concavité est orienté vers le côté intérieur du socle, c'est-à-dire du côté du tuyau 24 à supporter en ayant ainsi sa convexité en saillie vers l'extérieur. Le fond plat précité est traversé centralement d'un trou taraudé 7. Aux deux côtés symétriquement inclinés de cette portion intermédiaire en auget se raccordent, respectivement, deux parties courbes 8, 9 sensiblement symétriques par rapport au plan médian précité et circulairement cintrées suivant un rayon de courbure correspondant sensiblement au rayon extérieur du tuyau 24 à supporter en formant ainsi, chacune, une portion de surface cylindrique circulaire à concavité tournée vers l'intérieur du socle. Les angles d'inclinaison respectifs des parois latérales de la portion intermédiaire 6 en auget sur le fond plat de celle-ci et les angles de raccordement respectifs des portions cintrées 8, 9 avec ces parois latérales ainsi que les longueurs droites égales respectives desdites parois latérales et les longueurs curvilignes égales respectives desdits segments cintrés coaxiaux sont tels que l'arc d'embrassement du socle 1 sur le tuyau cylindrique circulaire 24 à maintenir est avantageusement capable d'un angle dièdre au centre au moins approximativement droit ou d'environ 90°. Aux deux parties cintrées 8, 9 se raccordent, ensuite, respectivement deux pattes planes 10, 11 de contour rectangulaire ou carré dont les plans sont inclinés respectivement suivant des angles sensiblement égaux de part et d'autre du plan médian précité en s'étendant du côté extérieur du socle à partir desdits segments cintrés. Les plans respectifs de ces pattes se coupent avantageusement dans le plan médian précité de façon que leur droite d'intersection coïncide sensiblement avec l'axe de révolution commun des deux segments cylindriques cintrés 8, 9 en formant ainsi un angle dièdre aigu rentrant, contenant le socle 1. Chaque patte se raccorde ainsi sensiblement à angle droit ou normalement à la partie cintrée adjacente. Toutes les arêtes ou lignes droites de pliage transversal de la bande de tôle formant le socle 1 sont sensiblement parallèles à l'axe de révolution commun des segments cylindriques 8, 9, c'est-à-dire à l'axe longitudinal du tuyau 24 à supporter en position montée dans le collier.

La patte 10 est traversée centralement d'un trou taraudé 12 tandis que la patte 11 est traversée d'une ouverture 13 sensiblement en forme de T, constituée par deux rainures ou fentes 13a, 13b s'étendant dans des directions mutuellement orthogonales, le plan de symétrie de cette ouverture 13 étant sensiblement parallèle à la direction commune des lignes de pliage précitées, c'est-à-dire à l'axe de révolution précité. La bande de tôle du socle 1 est de largeur uniforme et, en raison de la conformation particulière de l'ouverture 13 différente du trou circulaire 12, la patte 11 comportant cette ouverture peut être un peu plus longue que la patte 10 pourvue du trou rond 12.

La bride de serrage 2 comporte une partie intermédiaire 14 en forme de segment cylindrique circulairement arqué dont le rayon de courbure intérieur correspond sensiblement au rayon de courbure extérieur du tuyau 24 à maintenir. Cette partie en arceau est capable d'un angle au centre ou d'embrassement de tuyau inférieur à 180°, c'est-à-dire à une demi-circonférence et est relativement rigide ou indéformable notamment grâce à la présence d'une nervure longitudinale médiane de raidissement 15 radialement saillante vers l'extérieur du côté convexe de ladite partie arquée, c'est-à-dire par exemple emboutie en creux dans celle-ci du côté concave. La bande de tôle formant cette bride est de largeur uniforme sensiblement égale à celle de la bande de tôle formant le socle 1 mais d'épaisseur constante plus faible que celle de ce socle 1, donc plus mince que celui-ci. Les deux extrémités opposées de cet arceau 14 sont respectivement prolongées par deux parties plates généralement rectilignes 16, 17 et la valeur de l'épaisseur de la bande de tôle formant la bride 2 est choisie de telle façon que ces branches 16, 17, qui sont rectilignes à l'état libre, c'est-à-dire non monté de la bride 14 ou dans son état monté sur le socle 1 en absence de tuyau, soient relativement flexibles élastiquement. La branche 16 se termine à son extrémité libre par une patte repliée ou recourbée sensiblement rectangulaire ou carrée 18 dont la grandeur correspond au moins approximativement à celle de la patte 10 du socle 1 et qui, en position d'assemblage jointif de ces deux pattes, est au moins approximativement parallèle à la patte 10. Cette patte 18 comporte une encoche 19 en forme de fente à fond arrondi et à bords sensiblement rectilignes et parallèles ou légèrement divergents à partir dudit fond arrondi, cette encoche s'ouvrant ou débouchant à travers le bord longitudinal de la patte 18, c'est-à-dire de la bande de tôle formant la bride 2. Le plan longitudinal médian propre de cette encoche est avantageusement incliné légèrement sur l'axe de révolution de la partie en arceau 14 pour faciliter le montage et l'assemblage de la bride 2 sur le socle 1. La distance d'écartement, entre les bords opposés de l'encoche 19 et le diamètre du fond arrondi de celle-ci, est légèrement supérieure au diamètre du fût fileté de la vis de liaison et de serrage 3.

L'autre branche 17 de la bride 2 se termine par une patte d'accrochage 20 en prolongement aligné coplanaire direct de la branche 17 et conformée en T par découpe ou évidement symétrique bilatéral dans les deux bords longitudinaux parallèles de la branche 17. Cette patte d'accrochage 20 est ainsi sensiblement symétrique par rapport au plan longitudinal médian propre de la branche 17, perpendiculaire à la face large de cette dernière. La jambe 20a du T est ainsi en prolongement médian de la branche 17 et se termine par la barrette transversale 20b du T dont la longueur propre est de préférence inférieure à la largeur de la branche 17. Cette barrette transversale 20b du T est de forme sensiblement rectangulaire dont les coins ou angles opposés formant les sommets sur le côté long constituant le bord transversal externe ou terminal, sont de préférence chanfreinés ou arrondis pour faciliter l'accrochage au socle 1. La longueur de la jambe 20a du T formant la partie 20 est légèrement supérieure à l'épaisseur de la bande de tôle formant le socle 1 tandis que la largeur de cette jambe 20a du T correspond sensiblement, en étant légèrement inférieure, à la hauteur de l'ouverture 13 en T dans la patte 11 du socle parallèlement au plan médian de symétrie propre de cette ouverture 13 en T parallèlement à la direction de largeur de la bande de tôle formant le socle, c'est-à-dire à l'axe commun de révolution des segments cintrés 8 et 9 dudit socle. La longueur relative propre de la barrette transversale 20b du T de la patte d'accrochage 20 de la bride de serrage 2 est légèrement inférieure à la longueur propre de la rainure ou fente transversale 13a de l'ouverture 13 en T s'étendant parallèlement aux bords longitudinaux parallèles opposés de la patte 11 du socle 1.

La tige de fixation murale 4 comporte, à son extrémité opposée à la pointe, un embout cylindrique fileté 21 d'un diamètre correspondant au trou taraudé 7 du socle 1 pour pouvoir se visser dans ce dernier ainsi qu'un collet ou épaulement 22 situé à la base dudit embout pour servir de butée d'arrêt lors du vissage de la tige 4 à fond dans le trou taraudé 7. Le segment intermédiaire 6 en forme d'auget du socle 1 a une profondeur de creux, c'est-à-dire une distance de la face interne de son fond plat à la surface cylindrique circulaire tangente aux deux segments cintrés 8, 9 telle que la face terminale de l'embout 21 de la tige 4, en position vissée à fond de celle-ci dans le socle 1, reste écartée ou espacée de ladite surface cylindrique circulaire afin de ne pas venir en contact d'enfoncement avec la surface latérale externe du tuyau 24 à supporter.

La tige 4 est avantageusement de forme prismatique carrée afin de faciliter son vissage et son dévissage en offrant ainsi une prise commode à un outil approprié tel qu'une clé à écrou ou à molette. Cette tige peut être remplacée à volonté, selon les besoins, par une patte à vis 5 pourvue d'un embout fileté coaxial 23 analogue à l'embout 21 de la tige 4 et de diamètre correspondant à celui du trou taraudé 7 dans le socle afin que la patte à vis puisse se visser dans celui-ci, l'embout fileté partant d'un collet ou épaulement servant alors de butée d'arrêt (voir figure 3).

Les figures 2 et 4 montrent le collier conforme à l'invention à l'état assemblé, enserrant un tuyau 24. Pour relier la bride de serrage 2 par sa patte d'accrochage 20 au socle 1, cette bride est orientée et placée relativement de telle façon que sa branche 17 se présente devant l'orifice 13 du socle 1 en ayant sa direction transversale ou de largeur parallèle à la direction longitudinale de la patte 11 du socle 1, de sorte que la barrette transversale 20b de la patte d'accrochage 20 en forme de T de la bride 2 soit sensiblement parallèle à la direction longitudinale de ladite patte 11. On introduit ensuite la barrette transversale 20b de la patte d'accrochage 20 en T dans la rainure 13a formant traverse de l'ouverture 13 en T de la patte 11 du socle en passant ladite barrette 20b complètement à travers ladite rainure 13a jusqu'à ce que le bord transversal terminal 17' de la branche 17 de la bride vienne en butée contre la face interne ou avant de la patte 11 du socle, la barrette 20b de la patte d'accrochage 20 dépassant alors en saillie de la face opposée externe ou arrière de la pate 11. On tourne alors la bride d'environ 90° autour de l'axe longitudinal médian de la branche 17 donc de la jambe 20a du T de la patte d'accrochage 20 dans l'ouverture 13 de la patte 11 jusqu'à ce que le plan de la branche 17 soit parallèle au plan médian de symétrie propre de l'orifice 13 de la patte 11 ou sensiblement contenu dans ce dernier, de façon que la jambe 20a du T de la patte d'accrochage 20 soit placée sur champ dans la rainure 13b formant la jambe du T de l'ouverture 13 de la patte 11, de sorte que la barrette 20b de la patte d'accrochage 20 a sa direction longitudinale propre sensiblement perpendiculaire à la direction longitudinale propre de la rainure 13a formant traverse du T de l'ouverture 13. La bride 2 est ainsi attachée par sa branche 17 à la patte 11 du socle 1 car les parties latérales opposées alignées de la barrette 20b viennent en butée contre la face arrière ou externe de la patte 11. La bride 2 est alors en quelque sorte articulée à pivotement au socle 1 par sa patte d'accrochage 20 car elle possède alors une mobilité par déplacement angulaire limité dans toutes les directions. Cette mobilité permet notamment d'ouvrir et de fermer le collier par rotation relative de la bride 2 dans le plan du collier autour d'un axe au moins approximativement parallèle à l'axe longitudinal médian de la rainure 13b de la patte 11 et de pivoter ou de tourner sur elle-même autour de l'axe longitudinal médian de sa branche 17, de façon à pouvoir sortir du plan du collier en déplaçant ainsi sa patte 18 au moins approximativement parallèlement à la patte 10 du socle.

Le mode d'utilisation ou d'emploi du collier conforme à l'invention est alors le suivant : pour mettre en place le collier et monter un tuyau 24 dans celui-ci, on ouvre d'abord entièrement le collier par rotation appropriée de la bride 2 autour de son attache à la patte 11 du socle, de façon à dégager complètement la face avant ou interne de la partie intermédiaire en auget 6 du socle 1, ce résultat pourra également être obtenu par enlèvement complet de la bride 2. Si une tige 4 par exemple lisse à pointe a été auparavant montée sur le socle 1, on fixe ce dernier au mur en enfonçant la tige 4 à coups de marteau appliqués sur l'extrémité dépassante 21 de la tige 4, dans un avant-trou de dimension appropriée légèrement inférieure en dimension transversale à celle de la tige forée dans le mur. Si, au lieu de la tige 4, c'est une patte à vis 5 qui est montée sur le socle 1, celle-ci sera vissée dans le mur par son fût fileté, notamment en faisant tourner le socle autour de l'axe longitudinal de son trou taraudé 7. La bride 2 étant attachée par sa branche 17 à la patte 11 du socle 1, cette bride est rabattue latéralement vers l'extérieur pour l'ouvrir et pour permettre ainsi la mise en place d'un tuyau 24 à maintenir qui est appliqué en butée contre les parties cintrées 8, 9 du socle 1. La vis de serrage 3 aura été préalablement vissée partiellement dans le trou taraudé 12 de la patte 10 du socle 1, de façon à n'y être engagée que par son extrémité et à dépasser au maximum en saillie de la patte 10. La bride 2 est ensuite rabattue autour du tuyau 24 et engagée, au moyen d'un mouvement pivotant de celle-ci, par son encoche 19 dans sa patte 18 sur le fût fileté de la vis 3 de manière à venir en butée contre ce fût par le fond arrondi de ladite encoche, les pattes 10 et 18 étant alors sensiblement superposées en recouvrement mutuel en restant cependant écartées l'une de l'autre en raison de la présence du tuyau. Il suffit ensuite de visser la vis de serrage 3 pour enserrer étroitement le tuyau 24 en rapprochant ainsi quelque peu la patte 18 de la bride de la patte 10 du socle, ce serrage et ce rapprochement en translation rectiligne suivant l'axe longitudinal de la vis 3 provoquant une certaine déformation par flexion au moins de la branche associée 16 de la bride 2 qui vient alors épouser partiellement le tuyau 24.

La vis 3 peut rester montée à demeure sur le socle 1 car, pour permettre une fermeture et une ouverture aisées du collier, il est simplement nécessaire que cette vis soit suffisamment dévissée. Cette vis pourrait d'ailleurs être rendue imperdable si on le désire. Il est évident que le trou 12 dans la patte 10 du socle 1 pourrait aussi être lisse et la vis 3 être alors remplacée par un boulon (à vis et à écrou). Des colliers de diamètres différents seront évidemment prévus pour des tuyaux de diamètres différents.

Bien entendu, l'invention n'est nullement limitée au mode de réalisation décrit et illustré mais comprend tous les moyens équivalents à ceux décrits ainsi que leurs combinaisons dans le cadre des revendications suivantes.

## Revendications

1. Dispositif formant collier de fixation murale d'un corps cylindrique allongé quelconque, notamment d'un tuyau (24) en particulier adossé de descente pluviale, du type comprenant un socle relativement rigide (1) en forme de chape à portion intermédiaire de base (6) traversée d'un trou (7) pour l'attache d'un élément de fixation murale (4, 5) et à deux branches divergentes ayant chacune une partie concave arquée (8, 9) épousant coaxialement ledit tuyau (24) ; et une bride de serrage (2) à arceau relativement rigide (14) pour embrasser coaxialement ledit tuyau (24) et articulée par une extrémité (20) à l'extrémité de forme conjuguée (11) d'une branche correspondante dudit socle (1) en ayant son autre extrémité (10) conformée en patte terminale perforée extérieurement saillante correspondante (10) formée par la partie extrême de l'autre branche dudit socle (1) étant traversée d'un orifice (12) pour vis de liaison et de serrage des deux pattes (10, 18), lesquelles sont sensiblement parallèles en position montée jointive d'assemblage, caractérisé en ce qu'en combinaison :
- ledit socle (1) est de forme sensiblement symétrique généralement par rapport au plan médian transversal de ladite portion intermédiaire de base (6) ou dudit trou (7), passant par l'axe commun de courbure desdites parties concaves (8, 9) et comporte donc une seconde patte d'attache (11) formée à l'extrémité de la branche de socle opposée à ladite autre branche de celui-ci ;
- ladite bride de serrage (2) est articulée à ladite seconde patte d'attache (11) du socle (1) et est éventuellement partiellement déformable élastiquement ;
- ledit socle (1) embrasse ledit tuyau (24) suivant un arc inférieur à une demi-circonférence ;
- les deux pattes opposées (10, 11) du socle (1) sont sensiblement planes et inclinées également mais en sens opposés sur ledit plan médian en s'étendant ainsi du côté de la face externe du socle (1), de façon que leurs plans géométriques respectifs se coupent dans ledit plan médian en formant un dièdre en angle aigu rentrant, contenant ledit socle (1) et admettant ledit plan médian comme plan bissecteur ;
- ledit arc d'embrassement et ledit angle dièdre ont des valeur respectives telles qu'en configuration fermée du collier (1, 2), le contour apparent frontal dudit collier, vu du côté de la bride de serrage (2) suivant l'axe central dudit trou (7), présente une saillie latérale minimale desdites pattes (10, 11, 18) de socle (1) et de bride (2) vers l'extérieur, lesquelles sont ainsi peu visibles ou cachées en majeure partie en position montée dudit tuyau (24).

2. Dispositif selon la revendication 1, caractérisé en ce que la bride de serrage précitée (2) comporte une portion intermédiaire relativement rigide, courbée en arc circulaire inférieur à une demi-circonférence et prolongée sensiblement tangentiellement, à l'état non serré à chaque extrémité d'arc, par une portion sensiblement rectiligne, de préférence élastiquement flexible, de raccordement au socle précité (1).

3. Dispositif selon la revendication 1 ou 2, caractérisé en ce que la jonction d'articulation précitée (11, 20) est séparable, de façon à rendre la bride de serrage précitée (2) démontable de son socle (1).

4. Dispositif selon l'une des revendications précédentes, caractérisé en ce que, d'une part, la jonction d'articulation précitée (11, 20) est à pivotement, conférant à la bride de serrage précitée (2), une mobilité angulaire relative par rotation sphérique sensiblement dans toutes les directions et, d'autre part, l'ouverture (19) de passage de vis (3) dans la patte d'attache précitée (18) de ladite bride de serrage (2) est une encoche en fente à fond arrondi et à bords latéraux au moins approximativement rectilignes et parallèles ou légèrement divergents, débouchant dans un bord latéral de ladite patte (18) et orientée sensiblement obliquement, de façon à permettre son engagement libre sur la vis précitée montée sur le socle (1) et son dégagement de celle-ci par mouvement pivotant relatif de ladite bride de serrage (2).

5. Dispositif selon la revendication 4, caractérisé par une articulation précitée à parties coopérantes respectivement mâle (20) et femelle (13) et en ce que l'extrémité d'articulation de la bride de serrage précitée (2) est plate et conformée en bouton plat en forme de T dont la barrette transversale (20b) est sensiblement parallèle à l'axe de courbure de ladite bride de serrage (2) et destinée à être amoviblement reçu avec jeu dans un orifice en boutonnière (13) de forme complémentaire en T traversant la patte d'articulation (11) du socle précité (1) et dont la rainure transversale propre (13a) de la forme en T est sensiblement parallèle à un plan perpendiculaire au plan médian précité.

6. Dispositif selon l'une des revendications précédentes, caractérisé en ce que l'arc d'embrassement du tuyau (24) par le socle précité (1) est sensiblement équivalent à un quadrant et les plans respectifs des pattes précitées (10, 11) dudit socle (1) sont sensiblement radiaux et orthogonaux, leur droite d'intersection coïncidant avec l'axe commun de courbure précité.

7. Dispositif selon l'une des revendications précédentes, caractérisé en ce que le trou (7), traversant la portion intermédiaire de base du socle précité (1) et le trou (12) à vis (3) traversant une patte (10) dudit socle, sont taraudés.

8. Dispositif selon l'une des revendications précédentes, caractérisé en ce que la bande de tôle du socle précité (1) est plate et d'épaisseur uniforme relativement épaisse tandis que la bande de tôle formant la bride de serrage précitée (2) est plate, partiellement nervurée et relativement plus mince, d'épaisseur uniforme.
